# EUROPEAN PATENT SPECIFICATION

(11) **EP 4 048 125 B1**
(45) Date of publication and mention of the grant of the patent: **26.07.2023**
(21) Application number: 21741885.4
(22) Date of filing: 12.01.2021
(51) Int. Cl.: A47J 27/21

(54) **ELECTRIC KETTLE**
ELEKTRISCHER WASSERKOCHER
BOUILLOIRE ÉLECTRIQUE

(30) Priority: 13.01.2020 CN 202020058271 U; 15.06.2020 CN 202021093026 U; 16.12.2020 CN 202023060338 U
(43) Date of publication of application: 31.08.2022
(73) Proprietor: Top Electric Appliances Industrial Limited, Guangdong 510897 (CN)
(72) Inventor: LI, Weizhong, Guangdong 510897 (CN); ZHONG, Yewu, Guangdong 510897 (CN)
(74) Representative: Westphal, Mussgnug & Partner, Patentanwälte mbB
(86) International application number: PCT/CN2021/071305
(87) International publication number: WO 2021/143683

(56) References cited:
- WO-A1-2012/085602
- WO-A1-2019/205354
- CN-A- 109 330 366
- CN-A- 109 864 576
- CN-A- 109 984 597
- CN-U- 209 518 743
- CN-U- 211 883 399
- GB-A- 2 445 785

## Description

### TECHNICAL FIELD

The present invention relates to the field of hot water kettles, and more particularly, to an electric kettle.

### BACKGROUND

Electric kettles usually produce large noise during boiling water. During heating, the noises are mainly caused by vibration from uneven heating and bubble rupture. A conventional heating plate assembly is usually consisted of a stainless-steel chassis, a heat-conducting aluminum plate and a heating tube which are assembled by welding, and consequently has a relatively low heat transfer efficiency between the heat-conducting aluminum plate and the stainless-steel chassis. The aluminum has a thermal conductivity of 237 W/Mk, the stainless steel has a heat conductivity of 17 W/Mk. Thus the heat generated by the heating tube is mainly transferred through the heat-conducting aluminum plate, causing the heat carried by the heat conducting plate to accumulate above the heating tube and rise, forming a heat collecting area corresponding in shape to the heating tube on the chassis. In contrast, heat in the middle of the heat-conducting aluminum plate is less, resulting in a heat conducting area with less heat, and the heat is transmitted less laterally. The temperature of the heat conducting area in the middle of the chassis is obviously lower than that of the heat collecting area, resulting in obvious uneven heating. The uneven heating leads to slight vibration and consequently relatively obvious noise. While the temperature of water reaches over 65 degrees, bubbles gather in the corresponding heat collecting area above the heating tube, and break quickly, the noise is thus produced. In the market, to reduce the noise, coating with mute materials on a heating layer or a surface structured treatment is applied, but these measures won't effectively improve the heating efficiency of the heating tube, and have a certain impact on the temperature sensing control of the electric kettle. Some electric kettles are provided with concave-convex shapes on their bottom surfaces for larger heat conducting areas, but this type of electric kettles usually have a complicated structure and cannot be manufactured stably, for example, bad welding may occur, and impairs heating effect.

Document WO 2012/085602 A1 discloses an electric kettle, comprising a heating plate assembly arranged on a bottom of the electric kettle and comprising a chassis, a heat conducting plate, welded on a bottom of the chassis, and a heating tube, connected to a bottom of the heat conducting plate, wherein the chassis has an annular heat collecting area formed at a position corresponding to the heating tube, and the heat conducting plate is provided with grooves arranged on a surface of the heat conducting plate, the grooves are distributed radially outward.

### SUMMARY

The present invention aims to solve at least one of the technical problems in the existing art by providing an electric kettle with improved manufacturing stability as well as optimized heat conduction and reduced noise.

The electric kettle according to the invention is defined in claim 1.

In some embodiments, the grooves comprise first grooves and second grooves, the first grooves are distributed radially outward from the circumference of the locating hole, and the second grooves are communicated with the first grooves and are distributed radially in a circumferential fractal divergent manner in the heat collecting area.

In some embodiments, the convex ribs are annular or plum-shaped.

In some embodiments, the convex ribs have a triangular, arc-shaped or trapezoidal cross section.

In some embodiments, the grooves have a width L2 ranging from 2 mm to 8 mm.

In some embodiments, the chassis is punch formed by stainless steel, and the heat conducting plate is punch formed by an aluminum plate.

At least one of the foregoing technical solutions has at least one of the following advantages or beneficial effects: the chassis is provided with the plurality of continuously distributed convex ribs in the heat collecting area, and the heat conducting plate is provided with the grooves on the surface of the heat conducting plate for exhausting gas during welding, this structure facilitates the flux flow in the heat collecting area, offers more even welding between the inner sides of the convex ribs and the heat conducting plate, larger heat conducting area, increased welding connection strength, and thereby providing ease for punch forming, facilitating flux flow and enhancing welding stability.

Additional aspects and advantages of the present invention will be given in part in the following description, and will become apparent in part from the following description, or will be learned through the practice of the present invention.

### BRIEF DESCRIPTION OF DRAWINGS

The above and/or additional aspects and advantages of the present invention will be more apparent from the following description of embodiments in conjunction with the accompanying drawings, wherein:
FIG. 1 is a schematic view of an electric kettle according to an embodiment of the present invention;
FIG. 2 is a partial enlarged view of a portion A in FIG. 1;
FIG. 3 is a top view of a chassis according to the embodiment shown in FIG. 1;
FIG. 4 is an exploded view of a heating plate assembly according to the embodiment shown in FIG. 1;
FIG. 5 is a top view of a heat conducting plate according to the embodiment shown in FIG. 1;
FIG. 6 is a schematic view of a convex rib with an arc-shaped cross section according to an embodiment of the present invention;
FIG. 7 is a schematic view of a convex rib with a trapezoidal cross section according to an embodiment of the present invention;
FIG. 8 is a schematic view of a convex rib in plum shape according to an embodiment the present invention;
FIG. 9 is a top view of grooves in an arc-shaped and extending in a divergent manner on a heat conducting plate according to an embodiment of the present invention; and
FIG. 10 is a top view of grooves extending in a circumferential fractal divergent manner on a heat conducting plate according to an embodiment of the present invention.

### DETAILED DESCRIPTION

The embodiments of the present invention will be described in detail in this section, the preferred embodiments of the present invention are shown in the drawings, the drawings are intended to supplement the description in the written portion of the specification with figures, so that each of the technical features and the overall technical solution of the present invention can be intuitively and vividly understood, but it shall not be understood as a limitation to the protection scope of the present invention.

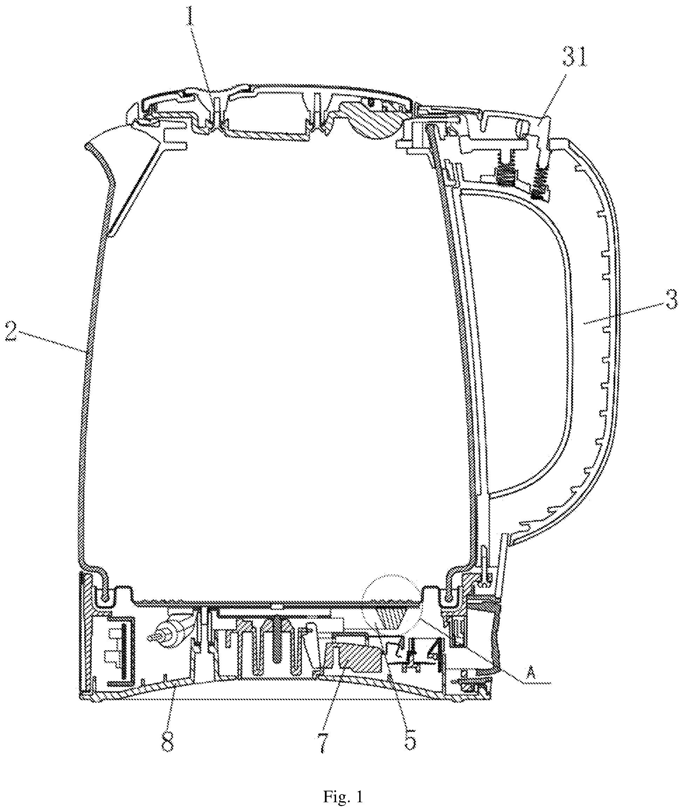

Referring to Fig. 1, in an embodiment of the present invention an electric kettle is provided. The electric kettle comprises a kettle cover 1, a kettle body 2, a handle 3, a temperature controller 8 and a bottom cover 8. The electric kettle is provided with a heating plate assembly on a bottom of the electric kettle. Typically, the electric kettle further comprises a control key 31 and a power supply pedestal (not shown) for providing power supply to the heating plate assembly. The power supply pedestal is provided with a lower electric connector, the bottom cover 8 is provided with an upper electric connector, and the handle 3 is provided with a cover opening key for opening the kettle cover 1.

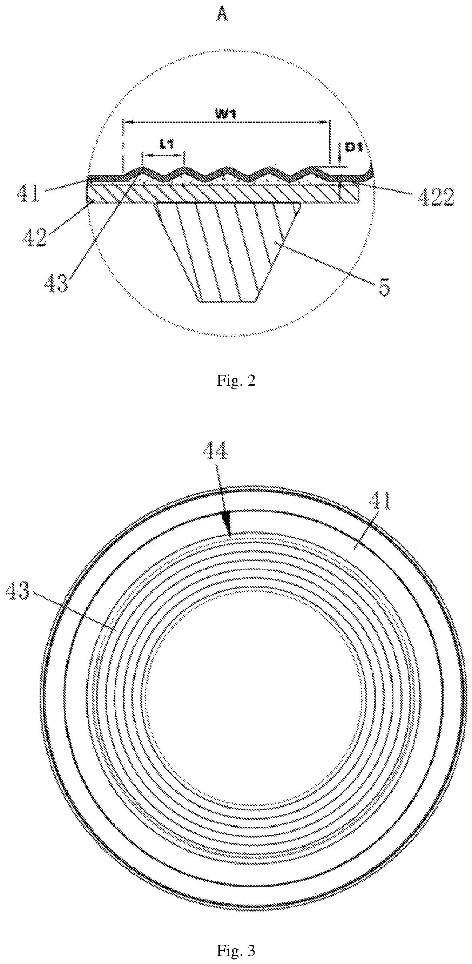

Referring to Figs. 2-4, the heating plate assembly comprises a chassis 41, a heating tube 5, and a heat conducting plate 42. The heat conducting plate 42 is welded to a bottom of the chassis 41. The heating tube 5 is connected to a bottom of the heat conducting plate 42. The heating tube 5 is bent into an annular shape. The chassis 41 has an annular heat collecting area 44 at a position corresponding to the heating tube 5. The heat collecting area 44 is larger than a projection plane of the heating tube 5. Surface portions of the chassis 41, except one for the heat collecting area 44, all serves as a heat conducting area. The chassis 41 has a plurality of continuously distributed convex ribs 43 formed in the heat collecting area 44. The convex ribs 43 extend along the heat collecting area 44 to increase heat conducting area. Aplurality of convex cavities 433 are defined between the chassis 41 and the heat conducting plate 42 through the plurality of continuously distributed convex ribs 43. The heat conducting plate 42 on a surface is provided with grooves 422 communicated with the concave cavities 433. After the chassis 41 is welded with the heat conducting plate 42, the concave cavities 433 and the grooves 422 are filled with flux.

The chassis 41 has the plurality of continuously distributed convex ribs 43 formed in the heat collecting area 44, and the convex ribs 43 are upward raised relative to the surface of the chassis 41. The heat conducting plate 42 is provided with the grooves 42 on the surface of the heat conducting plate 42. The grooves 42 are used for exhausting gas during welding, which is beneficial to flux flow in the heat collecting area 44, making the welding between the inner sides of the convex ribs 43 and the heat conducting plate 42 more even, increasing the heat conducting area and welding connection strength, as well as facilitating stamping forming, flux flow and welding stability.

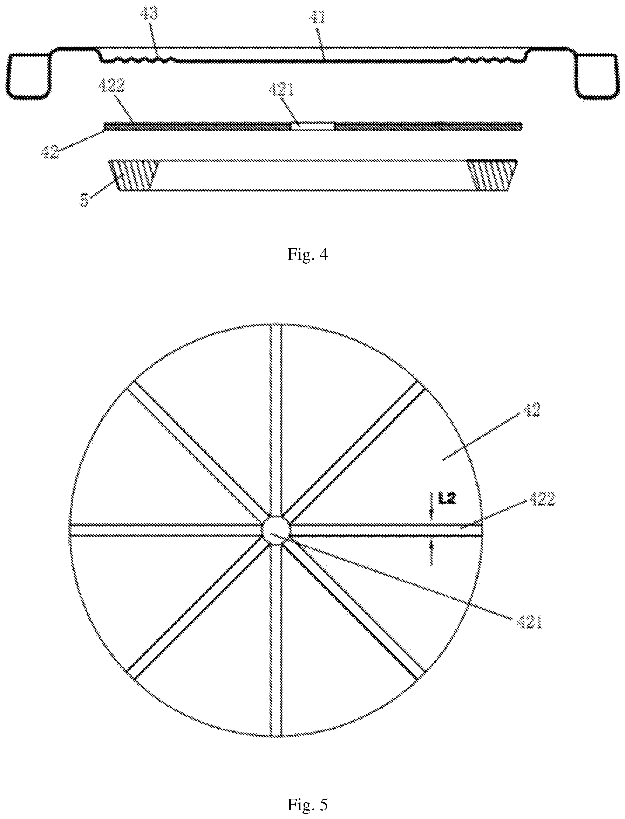

Referring to Fig. 5, the heat conducting plate 42 is provided with a locating hole 421 in a middle of the heat conducting plate 42. The locating hole 421 is used for positioning in welding. The grooves 422 extend from the locating hole 421 to an edge of the heat conducting plate 42 in a divergent manner, for example, extending in a radial direction, and the grooves 422 are used for exhausting air during welding, which is beneficial to the flux flow in the heat collecting area 44.

The heat conducting plate 42 can be made of metal materials, such as an aluminum plate with a high thermal conductivity, and the locating hole 421, the groove 422 and the heat conducting plate 42 are integrally stamped and formed on the aluminum plate.

The chassis 41 can be made of metal materials, for example, stainless steel, and the chassis 41 and the convex ribs 43 on the chassis 41 are integrally stamped and formed, thus reducing manufacturing difficulty.

In order to further optimize heat conduction and reduce noise, as shown in Fig. 2 and Fig. 4, the plurality of continuous convex ribs 43 are distributed all over the heat collecting area 44, where the convex ribs 43 are integrally stamped and formed, and continuously distributed.

Referring to Fig. 2, the heat collecting area 44 has a width W1 ranging from 12 mm to 30 mm, the convex rib 43 has a width L1 ranging from 2 mm to 5 mm, and the convex rib 43 has a height D1 ranging from 0.1 mm to 2 mm.

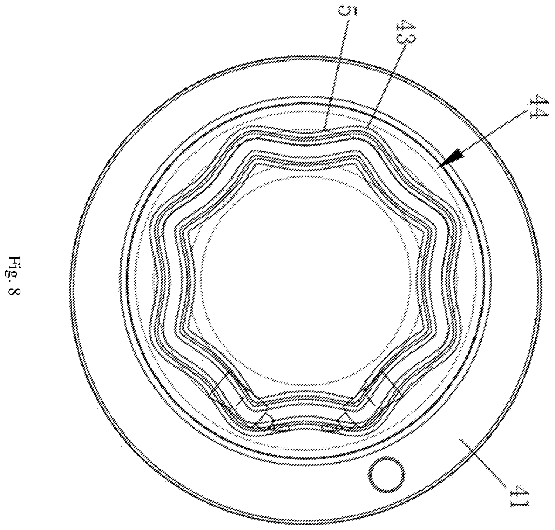

Referring to Fig. 3 and Fig. 8, the convex ribs 43 are annular or plum-shaped.

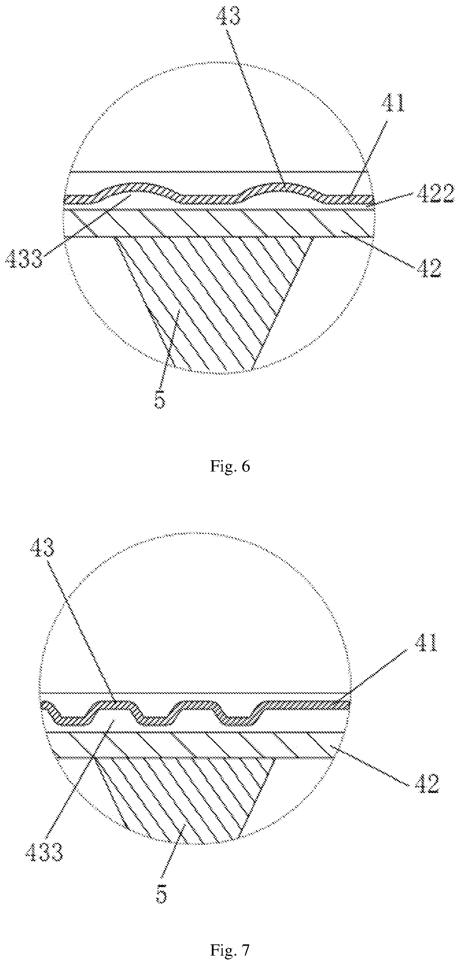

Referring to Fig. 2, Fig. 6, and Fig. 7, the convex ribs 43 have a triangular, arc-shaped or trapezoidal cross section, where the concave cavities 433 are located inside the convex ribs 43 and a bottom end of the concave cavities 433 is not lower than a bottom surface of the chassis 41, allowing the concave cavities 433 to be communicated with the grooves 422, thus ensuring the welding exhaust in the heat collecting area and facilitating the flux flow to form a stable welding connection structure.

In some embodiments, referring to Fig. 5, the grooves 422 have a width L2 ranging from 2 mm to 8 mm.

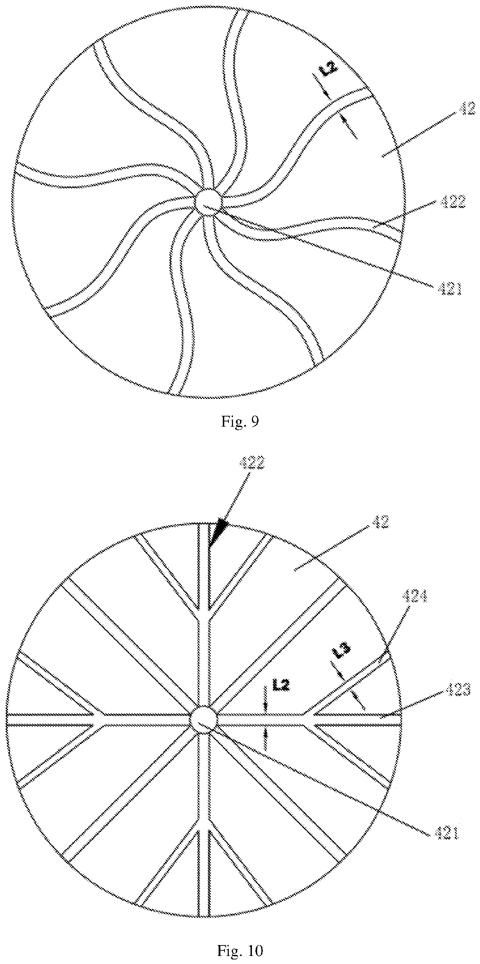

In some embodiments, referring to Fig. 9, the grooves 422 are arranged in a divergent manner on the heat conducting plate 42 with an arc-shape, and are distributed radially outward from the locating hole 421, so that a projection area of the grooves 422 on the heat conducting plate 42 is increased and a welding connection area is effectively increased.

In some embodiments, referring to Fig. 10, the grooves 422 are arranged in a circumferential fractal divergent manner on the heat conducting plate 42, where the grooves 422 comprise first grooves 423 and second grooves 424. The first grooves 423 are distributed radially outward from a circumference of the locating hole 421, and the second grooves 424 are communicated with the first grooves and distributed radially in a circumferential fractal divergent manner in the heat collecting area. The first grooves 423 have a width L2 ranging from 2 mm to 8 mm, and the second grooves 424 have a width L3 ranging from 0.5 mm to 3 mm, so that outer circumferences of the first grooves 423 and the second grooves 424 are densely distributed under the heat collecting area, and the welding area between the grooves 422 and the concave cavities 433 is increased while ensuring stable welding exhaust, thus forming a stable end-welding connection structure.

The present invention is not limited to the above embodiments, and those skilled in the art can make equivalent modifications or substitutions without departing the scope defined by the claims of this application.

## Claims

1. An electric kettle, comprising a heating plate assembly arranged on a bottom of the electric kettle and comprising:
a chassis (41),
a heat conducting plate (42), welded on a bottom of the chassis (41), and
a heating tube (5), connected to a bottom of the heat conducting plate (42), wherein, the chassis (41) has an annular heat collecting area (44) formed at a position corresponding to the heating tube (5) and is provided with a plurality of continuously distributed convex ribs (43) in the heat collecting area (44); the convex ribs (43) extend along the heat collecting area (44) and define a plurality of concave cavities (433) between the chassis (41) and the heat conducting plate (42); the convex ribs (43) protrude upward relative to a surface of the chassis (41), and the heat conducting plate (42) is provided with grooves (422) arranged on a surface of the heat conducting plate (42) and communicated with the concave cavities (433),
wherein, the heat conducting plate (42) is provided with a locating hole (421) in a middle of the heat conducting plate (42), and the grooves (422) are distributed radially outward from a circumference of the locating hole (421),
wherein, the convex ribs (43) are distributed all over the heat collecting area (44), wherein, the heat collecting area (44) has a width ranging from 12 mm to 30 mm, the convex ribs (43) have a width L1 ranging from 2 mm to 5mm, and the convex ribs (43) have a height ranging from 0.1 mm to 2 mm,
wherein, the concave cavities (433) are located inside the convex ribs (43), and the concave cavities (433) have bottom ends not lower than a bottom surface of the chassis (41).

2. The electric kettle of claim 1, wherein, the grooves (422) comprise first grooves (423) and second grooves (424), the first grooves (423) are distributed radially outward from the circumference of the locating hole (421), and the second grooves (424) are communicated with the first grooves (424) and are distributed radially in a circumferential fractal divergent manner in the heat collecting area (44).

3. The electric kettle of claim 1, wherein the convex ribs (43) are annular or plum-shaped.

4. The electric kettle of claim 1, wherein the convex ribs (43) have a triangular, arc-shaped or trapezoidal cross section.

5. The electric kettle of claim 1, wherein the grooves (422) have a width L2 ranging from 2 mm to 8 mm.

6. The electric kettle of claim 1, wherein, the chassis (41) is punch formed by stainless steel, and the heat conducting plate (42) is punch formed by an aluminum plate.

## Patentansprüche

1. Elektrischer Wasserkocher, der eine Heizplattenbaugruppe umfasst, die an einem Boden des elektrischen Wasserkochers angeordnet ist und Folgendes umfasst:
einen Unterbau (41),
eine Wärmeleitplatte (42), die an einem Boden des Unterbaus (41) angeschweißt ist, und
ein Heizrohr (5), das mit einem Boden der Wärmeleitplatte (42) verbunden ist,
wobei der Unterbau (41) einen ringförmigen Wärmesammelbereich (44) aufweist, der an einer Position ausgebildet ist, die dem Heizrohr (5) entspricht, und mit einer Vielzahl von kontinuierlich verteilten konvexen Rippen (43) in dem Wärmesammelbereich (44) versehen ist; wobei sich die konvexen Rippen (43) entlang des Wärmesammelbereichs (44) erstrecken und eine Vielzahl von konkaven Hohlräumen (433) zwischen dem Unterbau (41) und der Wärmeleitplatte (42) definieren; wobei die konvexen Rippen (43) relativ zu einer Oberfläche des Unterbaus (41) nach oben vorstehen und die Wärmeleitplatte (42) mit Aussparungen (422) versehen ist, die auf einer Oberfläche der Wärmeleitplatte (42) angeordnet sind und mit den konkaven Hohlräumen (433) in Verbindung stehen,
wobei die Wärmeleitplatte (42) mit einem Positionierungsloch (421) in einer Mitte der Wärmeleitplatte (42) versehen ist und die Aussparungen (422) von einem Umfang des Positionierungslochs (421) radial nach außen verteilt sind,
wobei die konvexen Rippen (43) über den gesamten Wärmesammelbereich (44) verteilt sind,
wobei der Wärmesammelbereich (44) eine Breite im Bereich von 12 mm bis 30 mm aufweist, die konvexen Rippen (43) eine Breite L1 im Bereich von 2 mm bis 5 mm aufweisen und die konvexen Rippen (43) eine Höhe im Bereich von 0,1 mm bis 2 mm aufweisen,
wobei sich die konkaven Hohlräume (433) innerhalb der konvexen Rippen (43) befinden und die konkaven Hohlräume (433) untere Enden aufweisen, die nicht niedriger als eine Bodenfläche des Unterbaus (41) sind.

2. Elektrischer Wasserkocher nach Anspruch 1, wobei die Aussparungen (422) erste Aussparungen (423) und zweite Aussparungen (424) umfassen, wobei die ersten Aussparungen (423) von dem Umfang des Positionierungslochs (421) radial nach außen verteilt sind und die zweiten Aussparungen (424) mit den ersten Aussparungen (424) in Verbindung stehen und in dem Wärmesammelbereich (44) in einer in Umfangsrichtung fraktal divergierenden Weise radial verteilt sind.

3. Elektrischer Wasserkocher nach Anspruch 1, wobei die konvexen Rippen (43) ringförmig oder pflaumenförmig sind.

4. Elektrischer Wasserkocher nach Anspruch 1, wobei die konvexen Rippen (43) einen dreieckigen, bogenförmigen oder trapezförmigen Querschnitt aufweisen.

5. Elektrischer Wasserkocher nach Anspruch 1, wobei die Aussparungen (422) eine Breite L2 im Bereich von 2 mm bis 8 mm aufweisen.

6. Elektrischer Wasserkocher nach Anspruch 1, wobei der Unterbau (41) aus rostfreiem Stahl gestanzt ist und die Wärmeleitplatte (42) aus einer Aluminiumplatte gestanzt ist.

## Revendications

1. Bouilloire électrique, comprenant un ensemble de plaque chauffante agencé sur un fond de la bouilloire électrique et comprenant :
un châssis (41),
une plaque thermoconductrice (42), soudée sur un fond du châssis (41), et
un tube chauffant (5), relié à un fond de la plaque thermoconductrice (42),
dans lequel, le châssis (41) a une zone de collecte de chaleur annulaire (44) formée à une position correspondant au tube chauffant (5) et est pourvu d'une pluralité de nervures convexes (43) réparties en continu dans la zone de collecte de chaleur (44) ; les nervures convexes (43) s'étendent le long de la zone de collecte de chaleur (44) et définissent une pluralité de cavités concaves (433) entre le châssis (41) et la plaque thermoconductrice (42) ; les nervures convexes (43) font saillie vers le haut par rapport à une surface du châssis (41), et la plaque thermoconductrice (42) est pourvue de rainures (422) agencées sur une surface de la plaque thermoconductrice (42) et communiquant avec le cavités concaves (433),
dans lequel, la plaque thermoconductrice (42) est pourvue d'un trou de positionnement (421) au milieu de la plaque thermoconductrice (42), et les rainures (422) sont réparties radialement vers l'extérieur à partir d'une circonférence du trou de positionnement (421),
dans lequel, les nervures convexes (43) sont réparties sur toute la zone de collecte de chaleur (44),
dans lequel, la zone de collecte de chaleur (44) a une largeur allant de 12 mm à 30 mm, les nervures convexes (43) ont une largeur L1 allant de 2 mm à 5 mm, et les nervures convexes (43) ont une hauteur allant de 0,1 mm à 2 mm,
dans lequel, les cavités concaves (433) sont situées à l'intérieur des nervures convexes (43), et les cavités concaves (433) ont des extrémités inférieures non inférieures à une surface inférieure du châssis (41).

2. Bouilloire électrique selon la revendication 1, dans laquelle, les rainures (422) comprennent des premières rainures (423) et des secondes rainures (424), les premières rainures (423) sont réparties radialement vers l'extérieur à partir de la circonférence du trou de positionnement (421), et les secondes rainures (424) communiquent avec les premières rainures (424) et sont réparties radialement d'une manière divergente fractale circonférentielle dans la zone de collecte de chaleur (44) .

3. Bouilloire électrique selon la revendication 1, dans laquelle les nervures convexes (43) sont annulaires ou en forme de prune.

4. Bouilloire électrique selon la revendication 1, dans laquelle les nervures convexes (43) ont une section transversale triangulaire, en forme d'arc ou trapézoïdale.

5. Bouilloire électrique selon la revendication 1, dans laquelle les rainures (422) ont une largeur L2 allant de 2 mm à 8 mm.

6. Bouilloire électrique selon la revendication 1, dans laquelle le châssis (41) est poinçonné par de l'acier inoxydable, et la plaque thermoconductrice (42) est poinçonnée par une plaque d'aluminium.
